# EUROPEAN PATENT APPLICATION

(11) **EP 4 704 247 A1**
(43) Date of publication of application: **04.03.2026**
(21) Application number: 24796836.5
(22) Date of filing: 12.04.2024
(51) Int. Cl.: H01M 50/595, H01M 10/04, H01M 10/0587, H01M 50/107, H01M 50/586, H01M 50/152, H01M 50/171, H01M 50/186, H01M 50/593

(54) **CYLINDRICAL BATTERY**

(30) Priority: 26.04.2023 JP 2023072133
(71) Applicant: Panasonic Intellectual Property Management Co., Ltd., Kadoma-shi, Osaka 571-0057 (JP)
(72) Inventor: HARAGUCHI,Shin, Kadoma-shi, Osaka 571-0057 (JP)
(74) Representative: Eisenführ Speiser
(86) International application number: PCT/JP2024/014847
(87) International publication number: WO 2024/225080

(57) **Abstract**

A cylindrical battery (10), which is one example of an embodiment, is provided with: an electrode body (14) having a wound structure; a bottomed cylindrical outer can (16) that accommodates the electrode body (14); and a sealing body that closes an opening portion of the outer can (16). A tape (50) for fixing a winding end of the wound structure is bonded to an outer peripheral surface of the electrode body (14). The tape (50) has an extension portion (53) extending from an end, on a grooved portion (22) side, of the outer peripheral surface of the electrode body (14), the extension portion (53) bending inward in the radial direction of the electrode body (14) and being interposed between the grooved portion (22) of the outer can (16) and the electrode body (14).

## Description

### TECHNICAL FIELD

The present disclosure relates to a cylindrical battery.

### BACKGROUND

Conventionally, there have been widely known cylindrical batteries including a spiral-type electrode assembly formed by spirally winding a positive electrode and a negative electrode together with an interposed separator, a bottomed cylindrical outer can that houses the electrode assembly, a sealing assembly that closes the opening of the outer can, and an insulating plate provided on top of the electrode assembly (see, for example, Patent Literature 1). Generally, the outer can of a cylindrical battery has formed thereon a grooved portion that supports the sealing assembly. Further, a lead extending from the negative electrode of the electrode assembly is connected to the outer can, and the outer can serves as the negative electrode external terminal. For this reason, the insulating plate is provided to prevent contact between the grooved portion of the outer can and the positive electrode of the electrode assembly.

### CITATION LIST

### PATENT LITERATURE

PATENT LITERATURE 1: Japanese Unexamined Patent Application Publication No. H06-243857

### SUMMARY

However, since both the electrode assembly and the insulating plate have a diameter smaller than the inner diameter of the outer can, in a case where the electrode assembly and the insulating plate become misaligned due to vibration, impact, or the like acting on the battery, part of the electrode assembly may be placed facing the grooved portion of the outer can without having the insulating plate interposed. Furthermore, misalignment between the electrode assembly and the insulating plate can occur also when the electrode assembly expands due to repeated charging and discharging of the battery. When in such situations, the electrode assembly and the grooved portion may come into contact with each other, and a short circuit may thereby be caused.

A cylindrical battery according to the present disclosure is a cylindrical battery including an electrode assembly having a spiral structure, a bottomed cylindrical outer can that houses the electrode assembly, and a sealing assembly that closes an opening of the outer can. The outer can has a grooved portion that supports the sealing assembly. A tape for fastening a lastly-wound end of the spiral structure is attached to an outer peripheral surface of the electrode assembly. The tape has a protruding portion that protrudes from an end, located on a side toward the grooved portion, of the outer peripheral surface of the electrode assembly. The protruding portion is bent radially inward of the electrode assembly and is interposed between the grooved portion and the electrode assembly.

According to the cylindrical battery according to the present disclosure, occurrence of a short circuit due to contact between the grooved portion of the outer can and the electrode assembly can be more reliably prevented. The winding fixation tape having the protruding portion is attached to the outer peripheral surface of the electrode assembly and forms a single unit with the electrode assembly, so that even when the electrode assembly moves inside the outer can, the protruding portion remains interposed between the grooved portion and the electrode assembly.

### BRIEF DESCRIPTION OF DRAWINGS

FIG. 1 is an axial cross-sectional view of a cylindrical battery according to an example embodiment.
FIG. 2 is a perspective view of an electrode assembly according to an example embodiment.
FIG. 3 is an enlarged view of part A in FIG. 1.

### DESCRIPTION OF EMBODIMENTS

Example embodiments of a cylindrical battery according to the present disclosure will now be described in detail by reference to the drawings. The embodiments described below are merely examples, and the present disclosure is not limited to the following embodiments. Further, configurations obtained by selectively combining the constituent elements of the embodiments described below are included within the scope of the present disclosure.

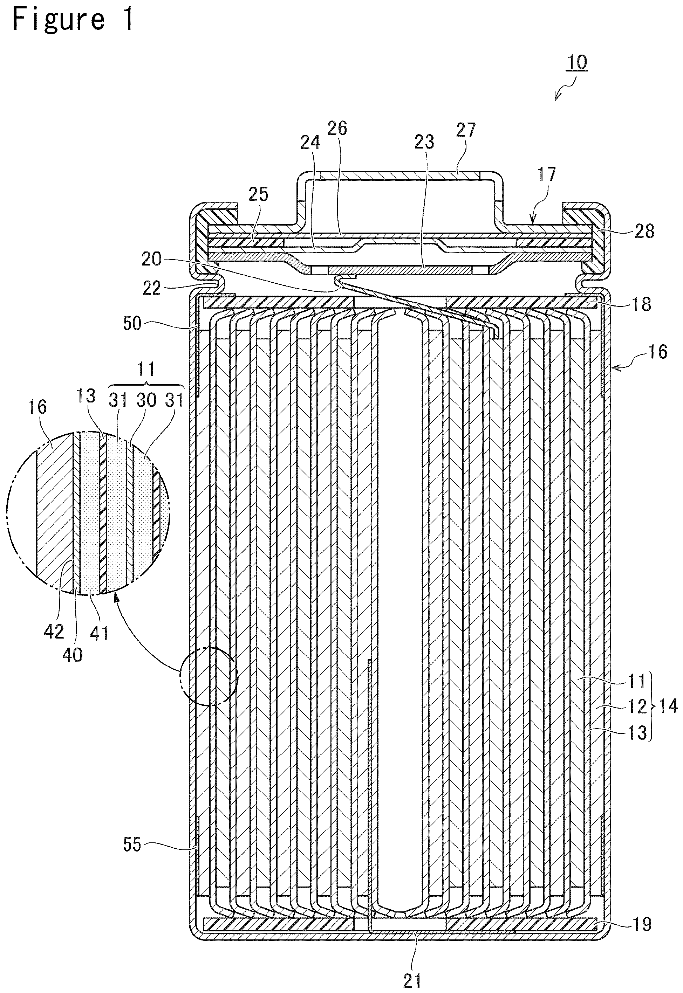

FIG. 1 is a diagram schematically showing an axial cross section of a cylindrical battery 10 according to an example embodiment. As shown in FIG. 1, the cylindrical battery 10 comprises an electrode assembly 14 having a spiral structure, an electrolyte, and an outer can 16 that houses the electrode assembly 14 and the electrolyte. The electrode assembly 14 comprises a positive electrode 11, a negative electrode 12, and a separator 13, and has a structure formed by spirally winding the positive electrode 11 and the negative electrode 12 together with the separator 13 interposed. The outer can 16 is a bottomed cylindrical metal container having an opening at one axial end, and the opening of the outer can 16 is closed by a sealing assembly 17. In the following, for convenience of explanation, the side of the battery toward the sealing assembly 17 will be referred to as "upper", and the side toward the bottom of the outer can 16 will be referred to as "lower".

While the electrolyte may be an aqueous electrolyte, a non-aqueous electrolyte is used in the present embodiment. The non-aqueous electrolyte has lithium ion conductivity. The non-aqueous electrolyte may be either a liquid electrolyte (or electrolyte solution) or a solid electrolyte. For example, the cylindrical battery 10 is a non-aqueous electrolyte secondary battery, and is preferably a lithium ion battery.

The liquid electrolyte (or electrolyte solution) contains a non-aqueous solvent and an electrolyte salt dissolved in the non-aqueous solvent. As the non-aqueous solvent, for example, esters, ethers, nitriles, amides, a mixed solvent containing two or more of the foregoing, and the like are used. Examples of the non-aqueous solvent include ethylene carbonate (EC), ethyl methyl carbonate (EMC), dimethyl carbonate (DMC), diethyl carbonate (DEC), and a mixed solvent containing the foregoing solvents. The non-aqueous solvent may contain a halogen-substituted product (such as fluoroethylene carbonate) obtained by substituting at least part of hydrogen atoms in the above solvents with halogen atoms such as fluorine. As the electrolyte salt, for example, a lithium salt such as LiPF₆ is used.

As the solid electrolyte, for example, a solid or gel polymer electrolyte, an inorganic solid electrolyte, and the like can be used. As the inorganic solid electrolyte, it is possible to use a material known for use in all-solid-state lithium ion secondary batteries and the like (such as an oxide-based solid electrolyte, a sulfide-based solid electrolyte, or a halogen-based solid electrolyte). The polymer electrolyte contains, for example, a lithium salt and a matrix polymer, or alternatively contains a non-aqueous solvent, a lithium salt, and a matrix polymer. As the matrix polymer, for example, a polymer material that absorbs a non-aqueous solvent and forms a gel is used. Examples of the polymer material include fluororesins, acrylic resins, and polyether resins.

The positive electrode 11, the negative electrode 12, and the separator 13, which constitute the electrode assembly 14, are all elongate strip-shaped members, and are alternately laminated in the radial direction of the electrode assembly 14 by being wound in a spiral shape. The negative electrode 12 is formed to have a size slightly larger than the positive electrode 11 in order to prevent lithium deposition. That is, the negative electrode 12 is formed to be longer than the positive electrode 11 in the longitudinal direction and in the width direction (or the shorter direction). The separator 13 is formed to have a size slightly larger than at least the positive electrode 11, and two sheets of the separator are arranged so as to sandwich the positive electrode 11. The cylindrical battery 10 includes insulating plates 18, 19 respectively provided above and below the electrode assembly 14.

The electrode assembly 14 has a positive electrode lead 20 connected to the positive electrode 11 by welding or the like, and a negative electrode lead 21 connected to the negative electrode 12 by welding or the like. In the present embodiment, the positive electrode lead 20 is connected to a longitudinally central part of the positive electrode 11, and the negative electrode lead 21 is connected to a longitudinal end part of the negative electrode 12 located toward the winding center of the electrode assembly 14.

The positive electrode 11 comprises a positive electrode core 30 and a positive electrode mixture layer 31 formed on the positive electrode core 30. As the positive electrode core 30, it is possible to use a foil of a metal such as aluminum or an aluminum alloy that is stable in the potential range of the positive electrode 11, a film having such metal provided on its surface layer, and the like. The positive electrode mixture layer 31 contains a positive electrode active material, a conductive agent, and a binder, and is preferably formed on both sides of the positive electrode core 30 in areas other than the part to which the positive electrode lead 20 is welded. The positive electrode 11 can be produced by, for example, applying a positive electrode mixture slurry containing the positive electrode active material, the conductive agent, the binder, and the like onto the positive electrode core 30, drying the applied coating, and then compressing the coating to thereby form a positive electrode mixture layer 31 on both sides of the positive electrode core 30.

The positive electrode mixture layer 31 generally contains, as the positive electrode active material, a lithium metal composite oxide in particulate form. The lithium metal composite oxide is a composite oxide containing a metal element such as Co, Mn, Ni, or Al in addition to Li. The metal element constituting the lithium metal composite oxide is, for example, at least one selected from Mg, Al, Ca, Sc, Ti, V, Cr, Mn, Fe, Co, Ni, Cu, Zn, Ga, Ge, Y, Zr, Sn, Sb, W, Pb, and Bi. Among these, at least one selected from Co, Ni, and Mn is preferably contained. Examples of a suitable composite oxide include a lithium metal composite oxide containing Ni, Co, and Mn, and a lithium metal composite oxide containing Ni, Co, and Al.

The negative electrode 12 comprises a negative electrode core 40 and a negative electrode mixture layer 41 formed on the negative electrode core 40. As the negative electrode core 40, it is possible to use a foil of a metal such as copper or a copper alloy that is stable in the potential range of the negative electrode 12, a film having such metal provided on its surface layer, and the like. The negative electrode mixture layer 41 contains a negative electrode active material, a binder, and, as necessary, a conductive agent, and is preferably formed on both sides of the negative electrode core 40 in areas other than an exposed portion 42 described later and the part to which the negative electrode lead 21 is welded. The negative electrode 12 can be produced by applying a negative electrode mixture slurry containing the negative electrode active material, the binder, and the like onto the surfaces of the negative electrode core 40, drying the applied coating, and then compressing the coating to thereby form a negative electrode mixture layer 41 on both sides of the negative electrode core 40.

The negative electrode mixture layer 41 generally contains, as the negative electrode active material, a carbon material that reversibly occludes and releases lithium ions. A suitable example of the carbon material is graphite, such as natural graphite or artificial graphite. As the negative electrode active material, it is also possible to use materials containing at least one of an element such as Si or Sn that forms an alloy with Li, and a material containing such element. Among the foregoing, a composite material containing Si is preferable. A suitable Si-containing composite material is composite particles containing an ion-conducting phase and a Si phase dispersed in the ion-conducting phase. As the negative electrode active material, the carbon material and the Si-containing composite material may be used in combination, which is preferable from the perspective of simultaneously achieving both high capacity and high durability in a battery.

As the separator 13, a porous sheet having ion permeability and insulating property is used. Specific examples of the porous sheet include a microporous thin film, a woven fabric, and a non-woven fabric. As the material of the separator 13, polyolefins such as polyethylene and polypropylene, cellulose, and the like are suitable. The separator 13 may have either a single-layer structure or a multi-layer structure. Further, on the surface of the separator 13, there may be formed a highly heat-resistant resin layer made of aramid resin or the like. A filler layer containing an inorganic filler may be formed at the interface between the separator 13 and at least one of the positive electrode 11 and the negative electrode 12.

At the outer peripheral surface of the electrode assembly 14, the negative electrode 12 is located, and the exposed portion 42 where the surface of the negative electrode core 40 is exposed is formed. The exposed portion 42 may be formed in a part of the outer peripheral surface of the electrode assembly 14, but is preferably formed in the entire area of the outer peripheral surface. The exposed portion 42 may be formed on only one side (or the outward surface) of the negative electrode core 40 facing outward of the electrode assembly 14, or may be formed on both sides of the negative electrode core 40. For example, the exposed portion 42 is formed within the extent of a length of approximately one to two times the circumferential length of the electrode assembly 14 from a longitudinal end part of the negative electrode 12 located at the outer peripheral surface of the electrode assembly 14.

In the cylindrical battery 10, the exposed portion 42 of the negative electrode 12 is in contact with the inner surface of the outer can 16, and the negative electrode lead 21 is connected to the inner surface of the bottom of the outer can 16 by welding or the like. For example, the exposed portion 42 is in contact with the inner surface of the outer can 16 in areas over the entire circumference of the outer peripheral surface of the electrode assembly 14. The positive electrode lead 20 extends through a through hole in the insulating plate 18 and toward the sealing assembly 17, and is connected by welding or the like to the lower surface of an internal terminal plate 23, which is the bottom plate of the sealing assembly 17. Accordingly, in the present embodiment, the sealing assembly 17 serves as the positive electrode external terminal, and the outer can 16 serves as the negative electrode external terminal.

As mentioned above, the outer can 16 is a bottomed cylindrical metal container having an opening at one axial end. A gasket 28 is provided between the outer can 16 and the sealing assembly 17 to ensure airtightness inside the battery and insulation between the outer can 16 and the sealing assembly 17. The outer can 16 has a grooved portion 22 formed thereon, where a part of the side wall projects inward, and which supports the sealing assembly 17. The grooved portion 22 is preferably formed in an annular shape along the circumferential direction of the outer can 16, and supports the sealing assembly 17 on its upper surface. The sealing assembly 17 is fixed to an upper part of the outer can 16 by means of the grooved portion 22 and an opening end of the outer can 16 which is crimped against the sealing assembly 17.

The sealing assembly 17 has a structure obtained by laminating, in order from the electrode assembly 14 side, the internal terminal plate 23, a lower vent member 24, an insulating member 25, an upper vent member 26, and a cap 27. Each of the members constituting the sealing assembly 17 has, for example, a disk shape or a ring shape, and the respective members except the insulating member 25 are mutually electrically connected. The lower vent member 24 and the upper vent member 26 are connected to each other at their central portions, and the insulating member 25 is interposed between peripheral portions of these vent members. When abnormality occurs in the battery and the internal pressure increases, the lower vent member 24 deforms and ruptures in a manner pushing up the upper vent member 26 toward the cap 27, and the current path between the lower vent member 24 and the upper vent member 26 is thereby cut off. When the internal pressure increases further, the upper vent member 26 ruptures, and gas is discharged from an opening in the cap 27.

To the outer peripheral surface of the electrode assembly 14, tapes 50, 55 are attached. The tapes 50, 55 are respectively attached to axial end parts of the outer peripheral surface of the electrode assembly 14; the tape 50 is provided at a position toward the grooved portion 22 of the outer can 16, while the tape 55 is provided at a position toward the bottom of the outer can 16. As will be described in more detail later, the tape 50 protrudes from an end, located on a side toward the grooved portion 22, of the outer peripheral surface of the electrode assembly 14, and this protruding portion is bent radially inward of the electrode assembly 14 and is interposed between the grooved portion 22 and the electrode assembly 14. The tape 50 also functions as an insulating member that prevents electrical contact between the grooved portion 22 of the outer can 16, which functions as the negative electrode external terminal, and the positive electrode **11** of the electrode assembly 14.

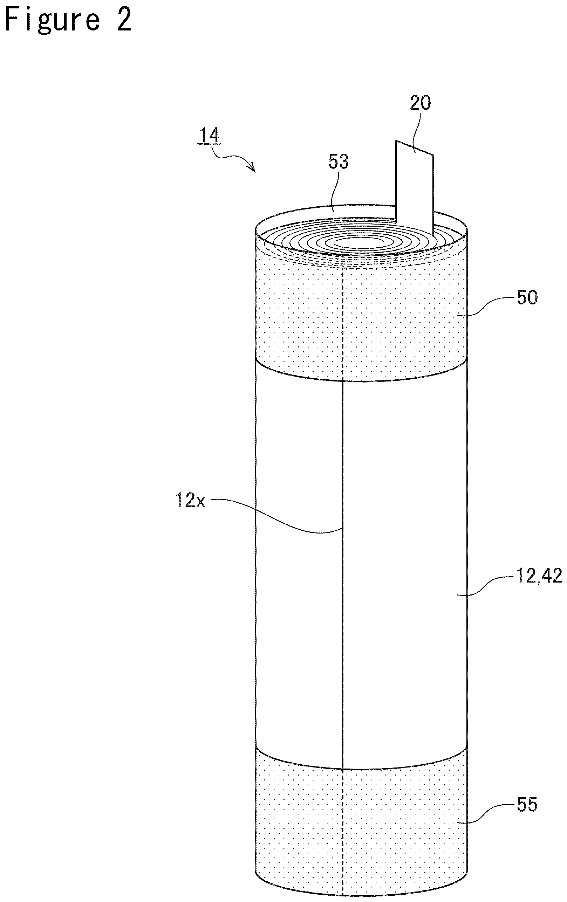

The tapes 50, 55 will now be described in detail by reference to FIG. 2. FIG. 2 is a perspective view of the electrode assembly 14.

As shown in FIG. 2, the tapes 50, 55 are winding fixation tapes for fastening the lastly-wound end 12x of the spiral structure of the electrode assembly 14 and maintaining the spiral structure of the electrode assembly 14. In the present embodiment, the exposed portion 42 of the negative electrode 12 constitutes the outer peripheral surface of the electrode assembly 14, and a longitudinal end of the negative electrode 12 forms the lastly-wound end 12x of the spiral structure. The tapes 50, 55 are attached to the outer peripheral surface of the electrode assembly 14 (or to the exposed portion 42) in a manner straddling across the lastly-wound end 12x, and fastens the lastly-wound end 12x to a part located toward the inner winding side from the lastly-wound end 12x of the outer peripheral surface of the electrode assembly 14.

The tapes 50, 55 are formed in a strip shape. The tapes 50, 55 are preferably provided such that their longitudinal directions are aligned along the circumferential direction of the electrode assembly 14, and such that the tapes 50, 55 are spaced apart from each other in the axial direction of the electrode assembly 14. The tape 50 is attached to an upper end part (or one axial end part) of the electrode assembly 14, and the tape 55 is attached to a lower end part (or the other axial end part) of the electrode assembly 14. In that case, the spiral structure of the electrode assembly 14 is maintained stably. Furthermore, the axial end parts of the electrode assembly 14 are prevented from being pushed against the edge of the outer can 16 and folded over, so that the electrode assembly 14 can be more smoothly inserted into the outer can 16.

The tape 50 extends along the circumferential direction of the electrode assembly 14 across the lastly-wound end 12x, and is attached over a length that is greater than or equal to 50 %, more preferably greater than or equal to 80 %, and particularly preferably greater than or equal to 90 % and less than or equal to 100 % of the circumferential length of the outer peripheral surface. Since the tape 50 is additionally used as an insulating member, the tape 50 preferably has a length of greater than or equal to 90 % of the circumferential length of the outer peripheral surface of the electrode assembly 14. Meanwhile, since the tape 50 would overlap itself if the length of the tape 50 exceeds 100 % of the circumferential length of the electrode assembly 14, the length is preferably less than or equal to 100 % of the circumferential length of the electrode assembly 14. The length of the tape 55 may the same as that of the tape 50, or may be different. The tape 55 is not additionally used as an insulating member, so that its length is sufficient so long as the tape 55 can be attached across the lastly-wound end 12x and can serve as a winding fixation tape without problem.

Each of the tapes 50, 55 has a width equivalent to, for example, greater than 5 % and less than 25 % of the axial length of the electrode assembly 14. The width of each of the tapes 50, 55 is preferably substantially uniform along its entire length. The respective widths of the tapes 50, 55 may be identical to each other, or may be different. When the width of the portion attached to the outer peripheral surface of the electrode assembly 14 is the same between the two tapes, the tape 50 is formed to have a width larger than that of the tape 55 by an amount corresponding to the portion protruding from the end, located on the side toward the grooved portion 22, of the outer peripheral surface. In consideration of attachment errors, the tape 55 is generally attached with a predetermined gap (which is, for example, less than or equal to 1 mm) from the lower end of the outer peripheral surface.

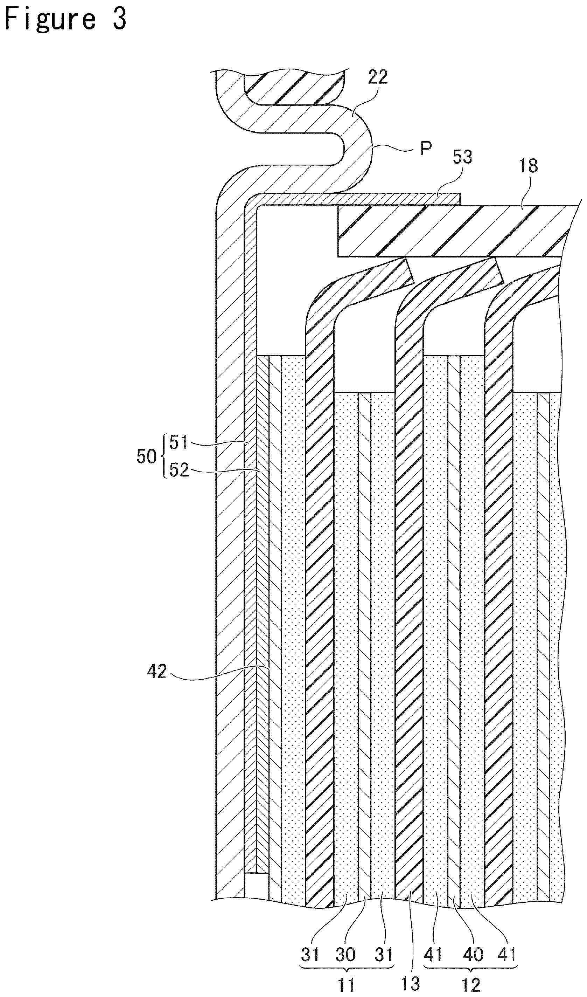

The tape 50 will now be described in further detail by reference to FIGS. 2 and 3. FIG. 3 is an enlarged view of part A in FIG. 1

As shown in FIGS. 2 and 3, the tape 50 attached to the upper end part of the electrode assembly 14 has a protruding portion 53 that protrudes from the upper end of the outer peripheral surface of the electrode assembly 14. The protruding portion 53 is interposed between the grooved portion 22 of the outer can 16 and the electrode assembly 14, and functions as an insulating portion that prevents electrical contact between the outer can 16, which functions as the negative external terminal, and the positive electrode **11** of the electrode assembly 14. That is, the tape 50 is a winding fixation tape that maintains the spiral structure of the electrode assembly 14, and is at the same time an insulating member that prevents short circuit. The tape 50 is attached to the outer peripheral surface of the electrode assembly 14 and forms a single unit with the electrode assembly 14.

The tape 50 includes a tape substrate 51 and an adhesive layer 52 provided on one side of the tape substrate 51. The tape 50 is preferably an insulating tape that has substantially no electrical conductivity. The tape substrate 51 is composed of a single-layer or multi-layer resin substrate. The tape 50 may contain an inorganic filler made of titania, alumina, silica, zirconia, or the like, and may separately include, in addition to the tape substrate 51 and the adhesive layer 52, a layer containing the inorganic filler. As the tape 55, it is possible to use an insulating tape having the same composition as the tape 50.

Examples of the resin constituting the tape substrate 51 include polyesters such as polyethylene terephthalate (PET), polypropylene (PP), polyimide (PI), polyphenylene sulfide (PPS), polyetherimide (PEI), and polyamide. The adhesive layer 52 is formed, for example, by applying an adhesive onto one side of the tape substrate 51.

The adhesive constituting the adhesive layer 52 may be of a hot-melt type that exhibits adhesiveness when heated or of a thermosetting type that hardens when heated, but in terms of productivity and the like, the adhesive preferably has adhesiveness at room temperature. Examples of the adhesive constituting the adhesive layer 52 include an acrylic adhesive and a synthetic rubber adhesive.

The thickness of the tape 50 is, for example, greater than or equal to 10 µm and less than or equal to 100 µm, and preferably greater than or equal to 20 µm and less than or equal to 70 µm. The thickness of the tape substrate 51 is greater than the thickness of the adhesive layer 52, and is, in one example, greater than or equal to 10 µm and less than or equal to 65 µm. An example thickness of the adhesive layer 52 is greater than or equal to 5 µm and less than or equal to 30 µm.

After the electrode assembly 14 with the tape 50 attached is placed in the outer can 16, by machining and forming the grooved portion 22 on the outer can 16, the protruding portion 53 of the tape 50 is pressed by the grooved portion 22 and is bent radially inward of the electrode assembly 14. At that time, if the protruding portion 53 adheres to the electrode assembly 14, it would be likely that the protruding portion 53 will not be bent properly. For this reason, it is preferable that the protruding portion 53 has no adhesiveness to the electrode assembly 14.

In the present embodiment, the adhesive layer 52 is not provided in the protruding portion 53, and the adhesive layer 52 is provided only in the portion facing the outer peripheral surface of the electrode assembly 14. The protruding portion 53 is composed of only the tape substrate 51. The entire area of the portion of the tape 50 that faces the outer peripheral surface of the electrode assembly 14 may be attached to the outer peripheral surface. It is also possible to configure such that the adhesive layer 52 is provided over the entire area on one side of the tape substrate 51, and in the protruding portion 53, the adhesive layer 52 is covered with a cover layer that has no adhesiveness. As the cover layer, for example, a resin substrate identical to the tape substrate 51 may be used.

As described above, the tape 50 includes the portion facing the outer peripheral surface of the electrode assembly 14, and the protruding portion 53 protruding from the upper end of the outer peripheral surface. As shown in FIG. 2, before the electrode assembly 14 is placed in the outer can 16, the protruding portion 53 protrudes in the axial direction of the electrode assembly 14 from the upper end of the outer peripheral surface. As shown in FIG. 3, after the electrode assembly 14 is placed in the outer can 16, when the grooved portion 22 is machined and formed on the outer can 16, the protruding portion 53 is bent radially inward of the electrode assembly 14 and becomes interposed between the grooved portion 22 and the electrode assembly 14.

In the present embodiment, an insulating plate 18 is provided between the electrode assembly 14 and the protruding portion 53 of the tape 50. That is, a part of the upper surface of the insulating plate 18 is covered by the protruding portion 53. Since the insulating plate 18 is not fixed to the electrode assembly 14, it may be likely that the electrode assembly 14 and the insulating plate 18 will become misaligned due to vibration, impact, or the like. However, by providing the protruding portion 53, it is possible to prevent the electrode assembly 14 and the grooved portion 22 from facing each other without having an insulating member interposed. It is also possible to omit the insulating plate 18.

The protruding portion 53 preferably extends radially inward of the electrode assembly 14 beyond the tip P of the grooved portion 22. The tip P of the grooved portion 22 is the part of the grooved portion 22 that is located at the radially innermost position. In that case, the lower surface of the grooved portion 22 facing the electrode assembly 14 is covered by the protruding portion 53 up to its tip P, so that electrical contact between the electrode assembly 14 and the grooved portion 22 can be more reliably prevented. The length L1 of the protruding portion 53 along the radial direction of the electrode assembly 14 may be the same as the length of the grooved portion 22 along the radial direction, but may be, for example, greater than or equal to 1.1 times and less than or equal to 2.0 times the length of the grooved portion 22 so that the entire lower surface of the grooved portion 22 is more reliably covered by the protruding portion 53.

As described above, the protruding portion 53 is formed by machining and forming the grooved portion 22 on the outer can 16 after the electrode assembly 14 with the tapes 50, 55 attached to its outer peripheral surface is placed in the outer can 16. As shown in FIG. 2, the tape 50 is attached protruding from the upper end of the outer peripheral surface of the electrode assembly 14 in the axial direction of the electrode assembly 14, and this protruding part is folded radially inward of the electrode assembly 14 to form the protruding portion 53. The tape 50 is attached to the outer peripheral surface of the electrode assembly 14 with a part of the tape 50 protruding in the axial direction in such a manner that the protruding part has a length that extends beyond the tip P of the grooved portion 22 when folded.

The grooved portion 22 is formed in an annular shape around the entire circumference of the outer can 16 by, for example, a spinning process. At that time, the tape 50 is bent radially inward of the electrode assembly 14 by the grooved portion 22, and the protruding portion 53 is thereby formed. In the present embodiment, the protruding portion 53 is pressed against the upper surface of the insulating plate 18 and is held between the insulating plate 18 and the grooved portion 22.

As described above, according to the cylindrical battery 10 having the above configuration, by making use of the winding fixation tape 50, occurrence of a short circuit due to contact between the grooved portion 22 of the outer can 16 and the electrode assembly 14 can be more reliably prevented. Since the tape 50 is attached to the outer peripheral surface of the electrode assembly 14 and forms a single unit with the electrode assembly 14, the protruding portion 53 remains interposed between the grooved portion 22 and the electrode assembly 14 even when the electrode assembly 14 and the insulating plate 18 are moved within the outer can 16. It is therefore also possible to omit the insulating plate 18.

The above-described embodiment can be modified in design as appropriate so long as the object of the present disclosure is not impaired. For example, although the outer peripheral surface of the electrode assembly 14 is composed of the exposed portion 42 of the negative electrode 12 in the above embodiment, the outer peripheral surface may alternatively be composed of the separator 13. In that case as well, the tape 50 may have the same configuration as in the above embodiment. Furthermore, although the outer can 16 functions as the negative electrode external terminal in the above embodiment, it is alternatively possible to connect the positive electrode lead 20 to the outer can 16 and cause the outer can 16 to serve as the positive electrode external terminal.

Further, the electrode assembly 14 may have a lead extending toward the sealing assembly 17 from a position facing the grooved portion 22. The lead is, for example, a positive electrode lead 20. Positive electrode leads 20 may be provided in a plural number along the longitudinal direction of the positive electrode 11, and some of those may extend from a position facing the grooved portion 22. In that case, the protruding portion 53 of the tape 50 is positioned between the grooved portion 22 and the positive electrode leads 20 and prevents contact therebetween. In other words, by using the tape 50, the leads can be easily provided at a position facing the grooved portion 22 of the electrode assembly 14.

Further, the protruding portion 53 of the tape 50 may have formed therein a slit extending in the radial direction of the electrode assembly 14. The slit is formed by cutting the tape substrate 51 from the edge of the protruding portion 53. Having the slit is suitable, for example, when the length L2 of the protruding portion 53 along the circumferential direction of the outer peripheral surface of the electrode assembly 14 is large, such as when the length L2 is greater than or equal to 90 % of the circumferential length of the grooved portion 22. The slit extends in the axial direction when the protruding portion 53 is aligned along the axial direction of the electrode assembly 14, and facilitates neat bending of the protruding portion 53. It is preferable that a plurality of slits are formed at intervals in the longitudinal direction of the protruding portion 53 along the circumferential direction of the electrode assembly 14. For example, the slits are arranged at equal intervals in the longitudinal direction of the protruding portion 53.

The present disclosure is further illustrated by the following embodiments.

Configuration 1: A cylindrical battery, comprising an electrode assembly having a spiral structure, a bottomed cylindrical outer can that houses the electrode assembly, and a sealing assembly that closes an opening of the outer can, wherein the outer can has a grooved portion that supports the sealing assembly, a tape for fastening a lastly-wound end of the spiral structure is attached to an outer peripheral surface of the electrode assembly, the tape has a protruding portion that protrudes from an end, located on a side toward the grooved portion, of the outer peripheral surface of the electrode assembly, and the protruding portion is bent radially inward of the electrode assembly and is interposed between the grooved portion and the electrode assembly.

Configuration 2: A cylindrical battery according to Configuration 1, wherein the tape includes a tape substrate and an adhesive layer provided on one side of the tape substrate, and the protruding portion has no adhesiveness to the electrode assembly.

Configuration 3: A cylindrical battery according to Configuration 1 or 2, wherein the protruding portion extends radially inward of the electrode assembly beyond a tip of the grooved portion.

Configuration 4: A cylindrical battery according to any one of Configurations 1 to 3, further comprising an insulating plate provided between the electrode assembly and the protruding portion.

Configuration 5: A cylindrical battery according to any one of Configurations 1 to 4, wherein the electrode assembly has a lead extending toward the sealing assembly from a position facing the grooved portion, and the protruding portion is positioned between the grooved portion and the lead.

Configuration 6: A cylindrical battery according to any one of Configurations 1 to 5, wherein a length of the tape along a circumferential direction of the outer peripheral surface of the electrode assembly is greater than or equal to 90 % and less than or equal to 100 % of a circumferential length of the outer peripheral surface.

Configuration 7: A cylindrical battery according to any one of Configurations 1 to 6, wherein the protruding portion has formed therein a slit extending in a radial direction of the electrode assembly.

### REFERENCE SIGNS LIST

10 cylindrical battery; 11 positive electrode; 12 negative electrode; 12x lastly-wound end; 13 separator; 14 electrode assembly; 16 outer can; 17 sealing assembly; 18, 19 insulating plate; 20 positive electrode lead; 21 negative electrode lead; 22 grooved portion; 23 internal terminal plate; 24 lower vent member; 25 insulating member; 26 upper vent member; 27 cap; 28 gasket; 30 positive electrode core; 31 positive electrode mixture layer; 40 negative electrode core; 41 negative electrode mixture layer; 42 exposed portion; 50, 55 tape; 51 tape substrate; 52 adhesive layer; 53 protruding portion; P tip.

## Claims

1. A cylindrical battery, comprising an electrode assembly having a spiral structure, a bottomed cylindrical outer can that houses the electrode assembly, and a sealing assembly that closes an opening of the outer can, wherein
the outer can has a grooved portion that supports the sealing assembly,
a tape for fastening a lastly-wound end of the spiral structure is attached to an outer peripheral surface of the electrode assembly,
the tape has a protruding portion that protrudes from an end, located on a side toward the grooved portion, of the outer peripheral surface of the electrode assembly, and
the protruding portion is bent radially inward of the electrode assembly and is interposed between the grooved portion and the electrode assembly.

2. A cylindrical battery according to claim 1, wherein
the tape includes a tape substrate and an adhesive layer provided on one side of the tape substrate, and
the protruding portion has no adhesiveness to the electrode assembly.

3. A cylindrical battery according to claim 1, wherein the protruding portion extends radially inward of the electrode assembly beyond a tip of the grooved portion.

4. A cylindrical battery according to claim 1, further comprising an insulating plate provided between the electrode assembly and the protruding portion.

5. A cylindrical battery according to claim 1, wherein
the electrode assembly has a lead extending toward the sealing assembly from a position facing the grooved portion, and
the protruding portion is positioned between the grooved portion and the lead.

6. A cylindrical battery according to any one of claims 1 to 5, wherein a length of the tape along a circumferential direction of the outer peripheral surface of the electrode assembly is greater than or equal to 90 % and less than or equal to 100 % of a circumferential length of the outer peripheral surface.

7. A cylindrical battery according to claim 6, wherein the protruding portion has formed therein a slit extending in a radial direction of the electrode assembly.
